# EUROPEAN PATENT SPECIFICATION

(11) **EP 1 850 148 B1**
(45) Date of publication and mention of the grant of the patent: **27.10.2010**
(21) Application number: 05700476.4
(22) Date of filing: 24.01.2005
(51) Int. Cl.: G01S 5/02

(54) **THE METHOD OF SELECTING MULTI SECTOR PILOT MEASUREMENTS BASED ON THE MODEL OF TIME DIFFERENCE LOCATING AND THE SYSTEM THEREOF**
VERFAHREN ZUR AUSWAHL VON MEHRFACH-SEKTOR-PILOTMESSUNGEN AUF DER BASIS DES MODELLS DER ZEITDIFFERENZLOKALISIERUNG UND SYSTEM DAFÜR
PROCEDE PERMETTANT DE SELECTIONNER DES MESURES PILOTES DE SECTEURS MULTIPLES EN FONCTION D'UN MODELE DE LOCALISATION DE DIFFERENCE TEMPORELLE ET SON SYSTEME

(43) Date of publication of application: 31.10.2007
(73) Proprietor: ZTE Corporation, Shenzhen, Guangdong 518057 (CN)
(72) Inventor: LI, Zhaofu, ZTE Plaza, Nanshan Distric, Guangdong 518057 (CN)
(74) Representative: Klein, Thomas
(86) International application number: PCT/CN2005/000103
(87) International publication number: WO 2006/076830

(56) References cited:
- EP-A- 1 448 007
- CN-A- 1 434 663
- JP-A- 61 020 873
- JP-A- 2002 243 828
- KR-A- 2001 064 729
- US-A- 5 454 720
- US-B1- 6 216 002
- US-B1- 6 275 186
- US-B1- 6 408 246
- US-B1- 6 484 034
- YIN C ET AL: "Optimum constellation of multisensors in a circular area based on TDOA" RADAR '97. EDINBURGH, OCT. 14 - 16, 1997; [IEE CONFERENCE PUBLICATION], LONDON : IEE, GB, vol. NO. 449, 14 October 1997 (1997-10-14), pages 323-327, XP006508960 ISBN: 978-0-85296-698-3

## Description

### Field of the Invention

The present Invention relates to a method for selecting multl-sector pilot measurements based on the locating model of time difference, and a system thereof.

### Description of the Related Art

As a newly-rising value-added service provided by the mobile communication network, a wireless locating service has a rapid development with its unique advantages: it can supply the exact and timely locating information to the users, and perform real-time monitoring and tracking on the terminals etc. Meanwhile, the relevant locating technologies thereof also have been developed rapidly. Among the present locating technologies of the mobile communication network, the hyperbolic locating method based on the locating model of time difference of arrival (TDOA) has been widely applied and grown into a relative maturity. The principle of the locating model is as follows:

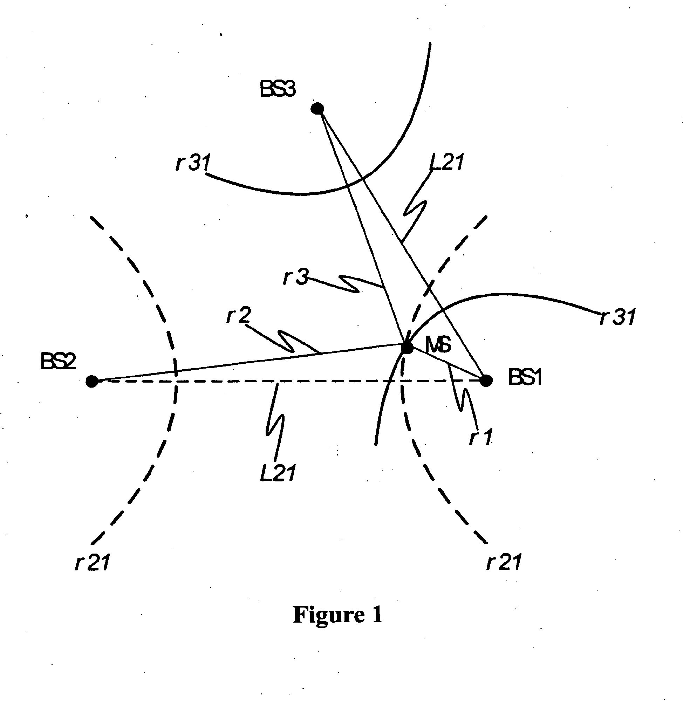

In the locating system, there are two position-known base station sectors with a synchronized clock timed by GPS (Global positioning system) or other types of high-accuracy clocks (see figure 1). In the diagram, the distances from MS (Mobile station) to the base stations BS1 and BS2 are measured as r1 and r2 respectively, and therefore the distance difference from MS to BS1 and BS2 can be calculated as D=| r1 - r2 |, which Is the TDOA (time difference of arrival) identified by the clock code chip. Since the distance from BS1 to BS2 is known and the distance difference can be measured, the position of mobile station will be located on the hyperbola with BS1 and BS2 as its focal points and L₂₁/D as its eccentricity. In such a way, if the distance difference from the mobile station to base stations BS3 and BS1 is measured, then another hyperbola can be calculated. The crossing point of the two hyperbolas will be the position of the mobile station MS (In the figure, r21 represents the distance from BS2 to BS1, r31 represents the distance from BS3 to BS1).

With the rapid development of chip technology and the increase of base station density, mobile station can measure more and more sector pilot phases and consequently obtain more and more TDOA In one locating process. In the cities, usually seven to ten sectors pilot phases will be measured by the high-pass chip M5105. Theoretically, any two pilot phases of a non-reference sector and a reference sector can be used to perform a hyperbola locating (TDOA locating). However, due to the measurement errors of NLOS (non-light of sight), multi-channel, etc and the limitation of the existing TDOA locating model algorithm, location results can not be calculated with some of the combinations of TDOA. More particularly, the different combinations of TDOA will have great influence on the ultimate location accuracy. Accordingly, a major technical problem is how to select the combinations of TDOA which can improve the ultimate locating-accuracy in this field.

Recently, the selection of the pilot phases is usually employed by the cellular mobile system with an aim to enhance the voice quality and reduce the switching time and sending power. Since the wireless location-based technique is subject to the technique of mobile station multi-pilot measurements, what is used for improving the locating accuracy by optimal selection of pilot measurements is an uncommon technology.

The Chinese patent "CN 143466, the method for selecting the base stations based on wireless locating system of network" relates to the technology of making a measurement at the base station side and employing the accuracy factors to select the base station. Nevertheless, this technology is not applicable to the selecting pilot sectors based on the mobile station measurements and TDOA locating models.

From EP 1 448 007 A a method for providing detection of time anomalies is known eliminating falsely detected positions in a hyperbolic positioning system for a simulated battlefield system.

In JP 61 020873 A a method is disclosed for forming a set of cells for time difference measurements for a mobile terminal camped on a first cell of a cellular network and being in idle mode.

In US 5 454 720 A a hyperbolic navigation position measuring device is disclosed.

### Summary of the Invention

The present invention aims to provide a method for selecting multi-sector pilot measurements based on the locating model of time difference and the system thereof, which is used for raising the locating accuracy by measuring the pilot phases and selecting the optimal ones thereof.

In order to realize the above object, the present invention discloses a method for selecting multi-sector pilot measurements based on the locating model of time difference with the limitations of claim 1.

The said optimal selection of the base station Includes based on the distance between non-reference and reference base station and distribution around the reference base station, selecting combinations of the corresponding base stations, and selecting the combination of a set of base stations which are distributing evenly around the reference station and have similar distances from it.

According to the present invention, dispatching the base station selection module to select the base stations comprises the following steps:
Step S61, selecting m number of non-reference and reference base stations from the grouped base stations to compose a combination;
Step S62, calculating the distances from the m number of non-reference base stations selected to the reference station and the mean square difference of these distances, respectively;
Step S63, evaluating the mean square difference, the smaller it is, the higher score it obtains, vise verse, the bigger the mean square difference, the lower score it obtains; Step S64, calculating the m number of included angles between adjoining base stations with the reference station as its vertex and the mean square difference of these angles; Step S65, evaluating the mean square difference of the included angles, the smaller it is, the higher scores it obtains, vice verse, the lager it is, the lower score It obtains;
Step S66, performing weighted mean on the evaluated scores of the distance mean square difference and the included angle mean square difference. In general, weighting of the evaluated scores of distance mean square difference ought to be more than that of the evaluated scores of angle mean square difference;
Step S67, after completing the calculation of all the combinations, selecting the pilot phase combination with the highest score of the weighted mean.

The following Is the specific steps:
Step S81, from the selected base stations, selecting the reference sector pilot phase and any pilot phase selected from each non-reference base station at random which compose a group of pilot phases;
Step S82, calculating the initial position of the mobile station according to this group of pilot phases or determining the initial position of the mobile station in other ways;
Step S83, calculating the distances between the centers of non-reference base stations and the initial position of mobile station;
Step S84, judging if the shortest distance is equals or close to the second shortest distance or not, if they are not equal and close, selecting the pilot measurement of the corresponding sector with the shortest distance and going to step S86; otherwise going to step 85;
Step S85, according to azimuths, flare angles and initial positions of respective sectors in the base station database, selecting the pilot measurement of the sector covering the initial position;
Step S86, outputting the pilot measurement of the selected sector.

The present invention discloses a mobile locating method, including the following steps: Step S31, the mobile station pilot measurement system sending the pilot measurement data to the pilot measurement selection system;
Step S32, the pilot measurement selection system performing a preliminary calculation and informing the position solution system the maximum applicable number of pilot measurements;
Step S33, the position solution system selecting the appropriate position locating algorithm according to the maximum applicable number of the pilot measurement and the requirement of the locating accuracy, and sending the request containing the designated number of pilot frequencies to the pilot measurement selection system to request the required pilot measurement;
Step S34, the pilot measurement selection system selecting pilot measurement and sending it to the position solution system.

The above steps from S33 to S34 can be repeated several times to adapt to different locating algorithms and obtain the most precise location results.

The mobile locating method includes the following steps as well:
Step S41, grouping the measured pilot phases according to base stations to which the sectors belongs, wherein the number of the groups is the number of the base stations measured by the mobile station this time;
Step S42, if the number of base stations is one, i.e. there is only one base station serving as the reference station, then selecting all pilot measurements and going to step S47;
Step S43,,If the number of the base stations is two, based on request of the position solution module, selecting a designated number of pilot phases and going to step S45;
Step S44, if the number of the base stations is equal to or more than three, dispatching the base station selection module to select the base stations and then going to step S45;
Step S45, judging whether to select the optimal ones of the multiple sectors measured by the same base station, if needed, going to step S46, or else, selecting the sector pilot phases used by the base station to perform position calculation and going to step S47;
Step S46, performing optimal selection of the multiple sectors measured by the same base station;
Step S47, sending the pilot measurements corresponding to the relevant sectors to the position solution module.
said optimal selection of the sectors (S46) includes using the distances from the centers of the sectors and further, the azimuth and flare angle of the sector antenna in a base station database, for estimating the sector which the initial position resides in.

The following is the specific steps:
Step S61, selecting m number of non-reference and reference base stations from the grouped base stations to compose a combination.
Step S62, calculating the distances from the m number of non-reference base stations selected to the reference station and the mean square difference of these distances, respectively.
Step S63, evaluating the mean square difference, the smaller it is, the higher score it obtains, vise verse, the bigger the mean square difference, the lower score it obtains. Step S64, calculating the m number of included angles between adjoining base stations with the reference station as its vertex and the mean square difference of these angles. Step S65, evaluating the mean square difference of the included angles, the smaller it is, the higher scores it obtains, vice verse, the lager it is, the lower score it obtains
Step S66, performing weighted mean on the evaluated scores of the distance mean square difference and the included angle mean square difference. In general, weighting of the evaluated scores of distance mean square difference ought to be more than that of the evaluated scores of angle mean square difference.
Step S67, after completing the calculation of all the combinations, selecting the pilot phase combination with the highest score of the weighted mean.

The said optimal selection of the sectors includes according to the distance from the sector center to the initial position, judging the sector which the initial position resides in preliminarily, which is further testified by the azimuth and flare angle of sector antenna in the base station database, judging the sector which the initial position resides in eventually and sequentially selecting the optimal pilot phases for calculation.

The following Is the specific steps:
Step S81, from the selected base stations, selecting the reference sector pilot phase and any pilot phase selected from each non-reference base station at random which compose a group of pilot phases.
Step S82, calculating the Initial position of the mobile station according to this group of pilot phases or determining the initial position of the mobile station in other ways.
Step S83, calculating the distances between the centers of non-reference base stations and the Initial position of mobile station.
Step S84, judging if the shortest distance is equals or close to the second shortest distance or not, if they are not equal and close, selecting the pilot measurement of the corresponding sector with the shortest distance and going to step S86; otherwise going to step 85.
Step S85, according to azimuths, flare angles and initial positions of respective sectors in the base station database, selecting the pilot measurement of the sector covering the initial position.
Step S86, output the pilot measurement of the selected sector.

The present invention also discloses a method comprising the following steps:
In step S61, supposing that position solution module requests m+1 number of pilot measurements;
Before step 567, judging if all the combinations have been calculated, if not, repeating step S61 to step S66; and
Before step S81, judging if there are pilot measurements with more than one sectors contained In the selected base stations, if not, going to step S86, otherwise going to step 581.

In order to realize the above object, the present invention discloses a pilot measurement selection system with the limitations of claim 6.

The pilot measurement selecting system also comprises that the said selection module selecting combinations of the corresponding base stations, and selecting the combination of a set of base stations which are distributing evenly around the reference station and have similar distances from it, based on the distance between non-reference and reference base station and distribution around the reference base station.

The said selection module comprising:
A composing submodule, selecting m number of non-reference and reference base stations from the grouped base stations to compose a combination;
A first calculating submodule, calculating the distances from the m number of non-reference base stations selected to the reference station and the mean square difference of these distances, respectively;
A first evaluating submodule, evaluating the mean square difference, the smaller it is, the higher score it obtains, vise verse, the bigger the mean square difference, the lower score it obtains;
A second calculating submodule, calculating the m number of Included angles between adjoining base stations with the reference station as its vertex and the mean square difference of these angles;
A second evaluating submodule, evaluating the mean square difference of the included angles, the smaller it is, the higher scores it obtains, vice verse, the lager it is, the lower score it obtains;
A weighted mean submodule, performing weighted mean on the evaluated scores of the distance mean square difference and the included angle mean square difference. In general, weighting of the evaluated scores of distance mean square difference ought to be more than that of the evaluated scores of angle mean square difference;
A selecting submodule, after completing the calculation of all the combinations, selecting the pilot phase combination with the highest score of the weighted mean.

The said judging and optimal selection module comprising:
A selecting submodule, from the selected base stations, selecting the reference sector pilot phase and any pilot phase selected from each non-reference base station at random which compose a group of pilot phases;
A first calculating submodule, calculating the initial position of the mobile station according to this group of pilot phases;
A second calculating submodule, calculating the distances between the centers of non-reference base stations and the initial position of mobile station;
A judging and selectlong submodule, judging if the shortest distance is equals or close to the second shortest distance or not, if they are not equal and close, selecting the pilot measurement of the corresponding sector with the shortest distance; otherwise selecting the pilot measurement of the sector covering the initial position, according to azimuths, flare angles and Initial positions of respective sectors In the base station database;
An outputting submodule, outputting the pilot measurement of the selected sector.

The mentioned pilot measurement selection system and position solution system are provided at the network side to realize the locating based on the network side calculation.

In comparison with the existing technology, due to selecting a group of sectors which Is near and evenly distributes around the reference sectors in the present invention, the error caused by measurement will be effectively counteracted and the locating accuracy will be highly improved. Because the present invention in principle avoids using two sectors of the same base station and the sectors which are insensitive to position to perform the position locating calculation, therefore It effectively avoids reducing the accuracy of the locating results caused by enlargement of measurement errors. The actual measurement demonstrates that as a result of applying the present program, the location results calculated by the optimal selection of the pilot measurements are closer to the actual position compared with the results calculated by other pilot measurements, thereby the locating accuracy is efficiently improved.

### Brief Description of the Drawings

Figure 1 is an accompany drawing of TDOA model.
Figure 2 is an accompany drawing of the location of mobile station on the hyperbola.
Figure 3 is a schematic drawing of interaction of mobile locating entity.
Figure 4 is a flow chart of pilot measurement selection system.
Figure 5 Is an accompanying drawing of selecting two sectors of the same base station.
Figure 6 is a flow chart of base station selection module.
Figure 7 is an illustration of the position of sectors and the 7reference sector and azimuth angles.

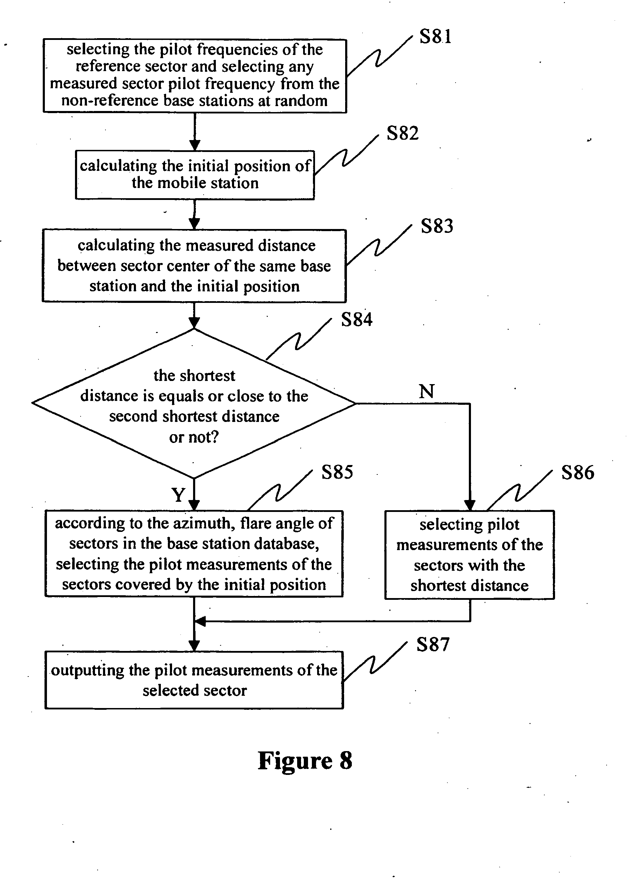

Figure 8 is a flow chart of sector selection module in the same base station.
Figure9 is an illustration of the principles of selecting sectors In the same base station.
Figure 10 is a layout of the positions testing of sectors and the true value point.

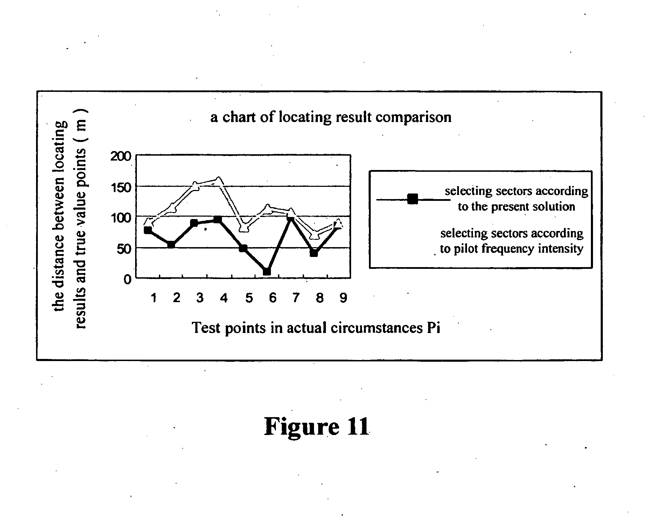

Figure11 is a comparison view of locating results.

### Detailed Description of the Invention

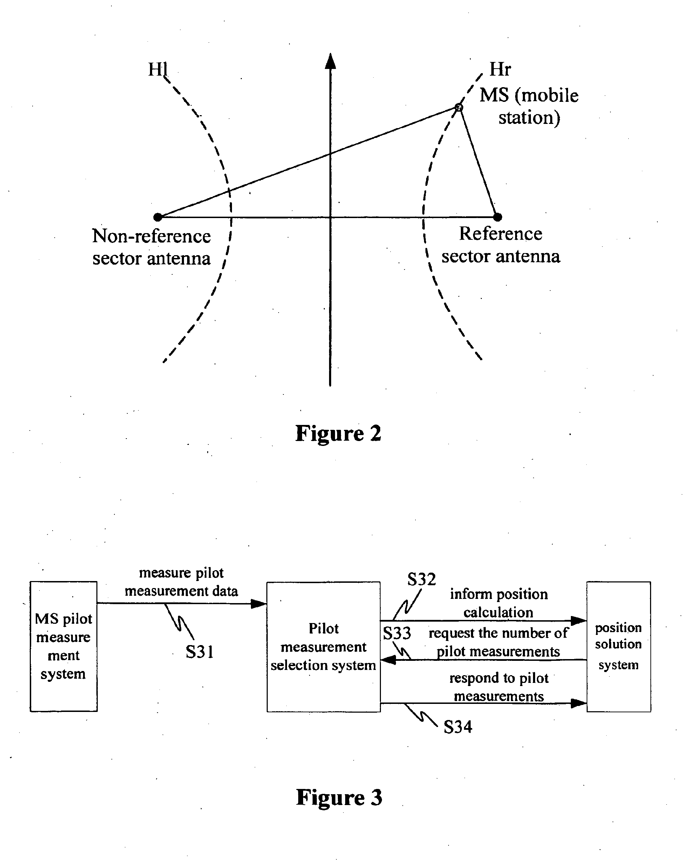

The present invention will be further described by combining with the figures and taking an example of CDMA network in the following: the thTDOA locating method is one of the major methods applied in the CDMA network mobile locating system. In the CDMA network, when the mobile station accesses one sector, it could receive clock synchronization signal sent by respective sectors. The sector whose clock synchronization signal reaches the mobile station first is called reference sector (RefSector), while the other sectors are called non-reference sectors (NonRef sectors). The base station to which the RefSector belongs is called reference base station (RefBS), while the other base stations to which the Non RefSectors belong are called non-reference base station (NonRefBS). RefSector is the sector nearby the mobile station and mostly will be a service sector. When the mobile station receives the clock synchronization signal from RefSector, it will synchronize its own clock with that clock; as a matter of fact, the synchronized clock of the mobile station is not the clock of the reference sector but the sum of the number of the code chip corresponding to the PN value of the reference sector and the number of the time slice taken by this clock synchronization signal to travel from sector antenna to the mobile station. When the clock synchronization signal of any non reference sectors arrives at the mobile station, the mobile station will measure a time difference of code chip formed of this reference sector and non reference sectors, which is also called time difference of arrival (TDOA). The distance difference from the mobile station to reference sectors and non reference sectors might be obtained by multiplying this TDOA with light velocity, which also marks the distance difference from the mobile station to the reference sector antenna and the said non reference antennae. According to this distance difference, the position of the mobile station will be calculated to be located on the hyperbolic cure with reference antenna and non-reference antennae as its focal points and 2C as its distance difference. Because the reference sector is near to the mobile station, i.e. the mobile station will be on a part of the hyperbola nearer to RefSector. In figure 2, HI and Hr stand for the left part and the right part of the hyperbola respectively. Dis (the position of MS, the position of non reference sector antennae) will be greater than the Dis( the position of MS, the position of reference sector antenna), the DOA( difference of arrival, i.e. distance differences of wireless signals arriving at mobile station) can be written as: DOA=( Dis (the position of MS, the position of non reference sector antennae) - Dis ( the position of MS, the position of reference sector antenna). In this way, more sector pilot measurement differences near reference sector and more groups of hyperbolas composed of reference sector and non reference sectors can be measured by a chip with a greater function of pilot measurement, and the crossing point of these hyperbolas is the position of mobile station. In fact, the locating algorithm is usually aimed to several measurements. Hereby, it is necessary to select designated number of pilot phases according to the requirement of the locating algorithm. Moreover, it is proved in practice that effective combination of the pilot phases used for calculation will highly improve the locating accuracy. Based on this requirement, the present invention is to propose a more comprehensive optimal selection method of multi-sector pilot measurements and it has been testified by practice.

The present invention is a method for selecting multi-sector pilot measurements based on the locating model of time difference. Please refer to figure 3. The mobile locating system consists of three parts: a MS pilot measurement system, a pilot measurement selection system and a position solution system, wherein the MS pilot measurement system is used for measuring the pilot phases from mobile station to respective sectors nearby; the pilot measurement selection system is used for selecting corresponding number of pilot measurements from the measured pilot phases according to the request containing the designated number of pilot measurements sent by a position solution system; and the position solution system is used for locating algorithm selection and position solution. The three parts are all embedded in the mobile station to realize the locating based on the mobile station calculation. The pilot measurement system and position solution system can also be provided at the network side to realize the locating based on the network side calculation.

The following steps are included:
Step S31, the mobile station pilot measurement system sending the pilot measurement data to the pilot measurements selection system;
Step S32, performing a preliminary calculation and informing the position solution system the maximum applicable number of pilot measurements;
Step S33, the position solution system selecting the appropriate position locating algorithm according to the maximum applicable number of the pilot measurement and the requirement of the locating accuracy, and sending the request containing the designated number of pilot frequencies to the pilot measurement selection system to request the required pilot measurement;
Step S34, the pilot measurement selection system selecting pilot measurement and sending it to the position solution system.

The above steps from S33 to S34 can be repeated several times to adapt to different locating algorithms and obtain the most precise location results.

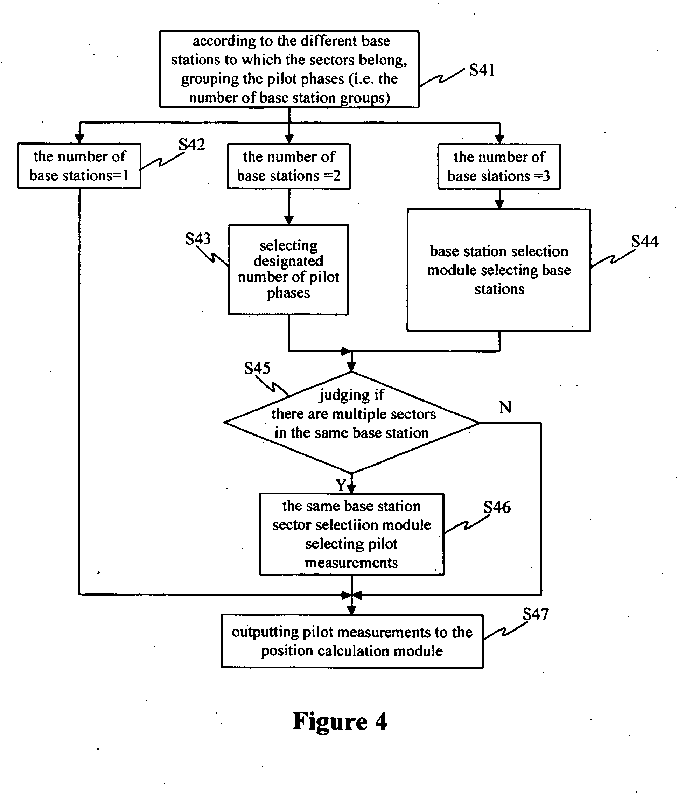

The MS pilot measurement system and position solution system is not the technical solution the present invention aims to solve, so more detailed description about them will be omitted. The following description will focus on pilot measurements selection system, and please refer to figure 4. It mainly consists of two modules: base station selection module and sector selection module. Base station selection module is used for making an optimal selection to the base stations applicable for calculation according to the request of the position solution system. The sector selection module is used for selecting the optimal pilot measurement from plurality of pilot measurements in the selected base station. The pilot measurement selection system also comprises: a grouping module, grouping the measured pilot phases according to base stations to which the sectors belongs; a judging module, judging the number of base stations and judging if the optimal selections of sectors and base stations are needed or not.

This pilot measurement selection system also comprises: a base station selection module, making an optimal selection to the base stations applicable for calculation according to the request of the position solution system; a sector selection module, selecting the optimal pilot measurement from plurality of pilot measurements in the selected base station.

There is an optimal selection method of pilot measurements, which is used for selecting the multi-sector pilot measurements based on the locating model of time difference. This method also includes:
A grouping step, grouping the measured pilot phases according to base stations to which the sectors belongs;
A judging step, judging the number of base stations and judging if the optimal selections of sectors and base stations are needed or not;
A base station selecting step, making an optimal selection to the base stations applicable for calculation according to the request of the position solution system;
A sector selecting step, selecting the optimal pilot measurement from plurality of pilot measurements in the selected base station.

The figure 4 shows the specific steps of pilot measurement selection system:
Step S41, grouping the measured pilot phases according to base stations to which the sectors belongs, wherein the number of the groups is the number of the base stations measured by the mobile station this time, which is called grouping step;
Step S42, if the number of base stations is one, i.e. there is only one base station serving as the reference station, then selecting all pilot measurements and going to step S47;
if the number of the base stations is two, then going to step S43; if the number of the base stations is equal to or more than three, then going to step S44;
Step S43, based on the request of position solution, selecting a designated number of pilot phases and going to step S45;
Step S44, selecting the optimal ones of the base stations and going to step S45;
Step S45, judging whether to select the optimal ones of the multiple sectors measured by the same base station, if needed, going to step S46, or else, selecting the sector pilot phases used by the base station to perform position calculation and going to step S47;
Step S46, performing optimal selection of the multiple sectors measured by the same base station;
Step S47, sending the pilot measurements corresponding to the relevant sectors to the position solution module.

The following part will provide a further explanation of the embodiments for carrying out the base station grouping module, judging module, base station selection module and sector selection module mentioned in the above steps.

### 1. The reasons of base station grouping

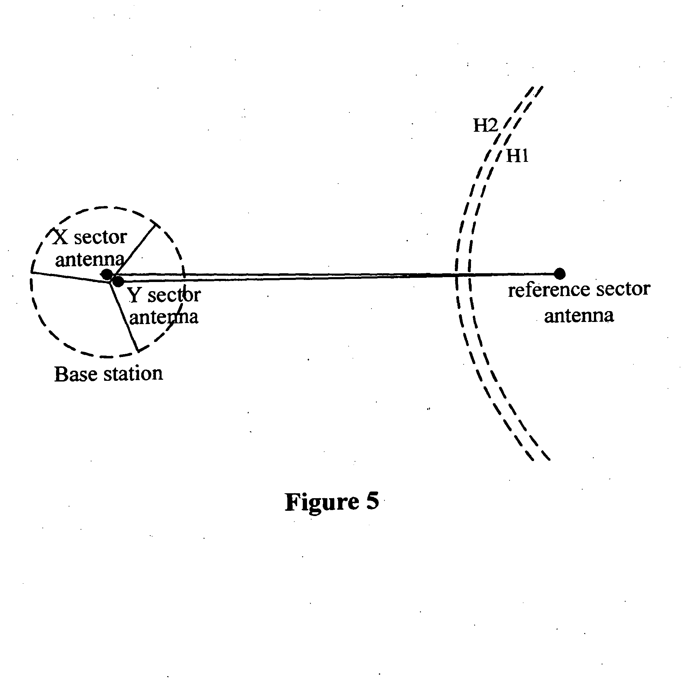

Grouping of the base stations aims to avoid adopting two pilot measurements belonging to the same base station in one location calculation. The following part will take TDOA which selects two non-reference pilot measurements and one reference pilot measurement as an example to explain the necessity of the avoidance mentioned above:
a. the two sectors in the same base station, please refer to figure 5. The antennae of the two sectors are very close to each other (approximately 10m), while the RefSector is the same. The corresponding geometric parameter of the hyperbola H1 which is composed of reference sector antenna and X sector antenna is Cx=Dis (X sector antenna, reference sector antenna), while the corresponding geometric parameter of the hyperbola H2 which is composed of reference sector antenna and y sector antenna is Cy = Dis (Y sector antenna, reference sector antenna). Cx and Cy is much closer to each other. Meanwhile, the X sector antenna and the Y sector antenna is very close to each other and the reference sectors RefSector are the same, hence the two DOA from the mobile station to X sector antenna and y sector antenna are very close and consequently the parameter a1 of hyperbola H1 is very close to the parameter a2 of hyperbolic H2. Because of the two reasons above, the slope of H1 and H2 asymptotes are very close to each other. Furthermore, because the locations of X sector antenna and Y sector antenna are very near to each other and they have the same RefSector, the included angle composed of X sector antenna, RefSector and Y sector antenna is very small, so H1 and H2 are almost parallel. The calculated position is the crossing point of the two hyperbolas, which must be quite far from reference base station. Although geometrically there is such a crossing point, it is not logic in service. In the view of TDOA model calculation, this crossing point is not very sensitive to distance, namely, there will be more errors in the location calculated based on this crossing point. Therefore, it is not feasible to calculate the position by adopting two sectors in the same base station.
b. the position of mobile station should be covered by one sector of the base station. As the direction angle is wrong, the measured pilot phases will contain more errors caused by the refraction and diffraction.

### 2. Judging steps

This step is to judge if optimal selection of the base station and sectors is needed or not according to the number of base stations: if the number of base stations is one, the optimal selection of the base station and sectors being not needed, if the number of base station is 2, performing optimal selection sectors instead of that of the base station, if the number is three or more than three, performing both optimal selection of the base station and sectors.

### 3. Base station selection module

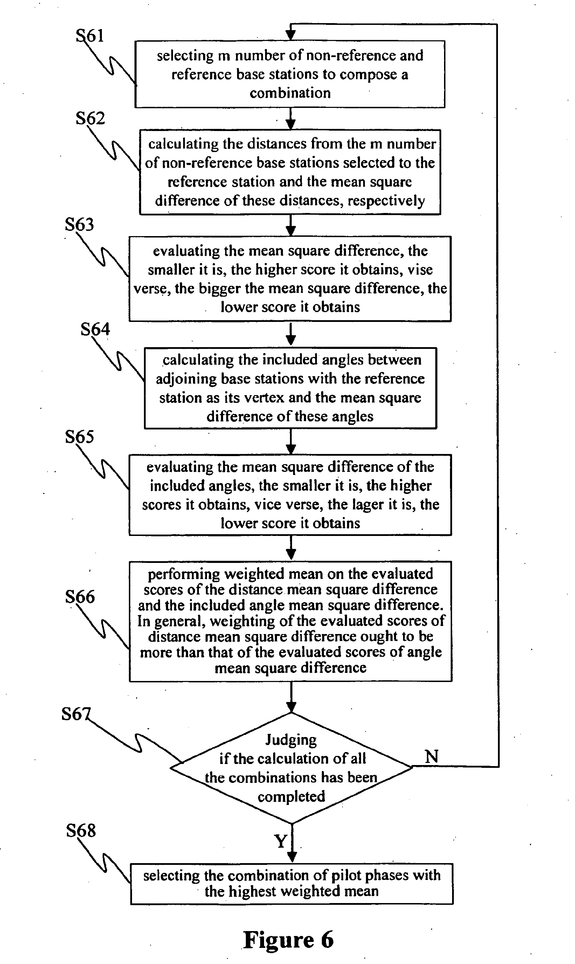

Supposing the position solution module requests m+1 number of pilot measurements to calculate the position, please refer to figure 6. The following steps should be included:
Step S61, selecting m number of non-reference and reference base stations from the grouped base stations to compose a combination;
Step S62, calculating the distances from the m number of non-reference base stations selected to the reference station and the mean square difference of these distances, respectively;
Step S63, evaluating the mean square difference, the smaller it is, the higher score it obtains, vise verse, the bigger the mean square difference, the lower score it obtains; Step S64, calculating the m number of included angles between adjoining base stations with the reference station as its vertex and the mean square difference of these angles; Step S65, evaluating the mean square difference of the included angles, the smaller it is, the higher scores it obtains, vice verse, the lager it is, the lower score it obtains;
Step S66, performing weighted mean on the evaluated scores of the distance mean square difference and the included angle mean square difference. In general, weighting of the evaluated scores of distance mean square difference ought to be more than that of the evaluated scores of angle mean square difference;
Step S67, after completing the calculation of all the combinations, selecting the pilot phase combination with the highest score of the weighted mean.

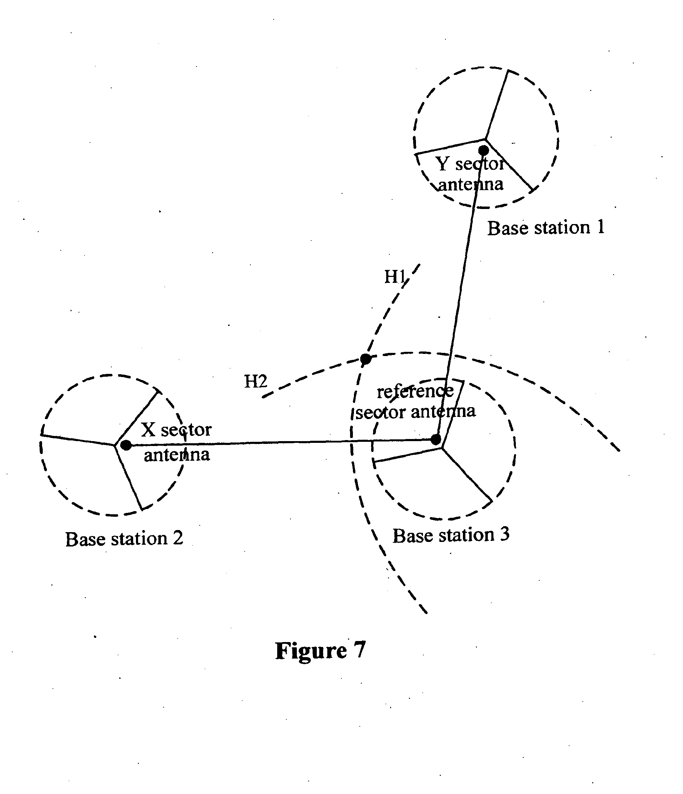

In conclusion, the corresponding combination of base stations is selected according to the distance between non-reference and reference base stations and the distribution of non-reference base stations around reference base station. The combination of a set of base stations which are distributing evenly around the reference station and have similar distances from it is selected. The following description will explain the reason in combination of figure 7: the distance from non-reference sector antenna to reference antenna is short, i.e. Dis (X sector antenna, reference sector antenna) is similar with Dis (Y sector antenna, reference sector antenna). Thereby, it can be deduced that the geometric parameters of the two hyperbolas C are also similar. Because the distances from real position to the position of reference station are the same, it can be deduced that the distance from base station 1 to the measuring point is close to that from base station 2 to the measuring point. The similar distances can reduce the errors caused by transmission of the pilot frequencies in the air. In addition, the use of TDMA measurements will further reduce the errors. The non-reference sectors distributed evenly around reference sector aims to avoid the included angle of "X sector antenna - RefSector- Y sector antenna" being too small and introducing a set of sector pilot measurements which is insensitive to position to participate in the position calculation.

### 4. Sector selection module

The base station selected according to the above principle will usually contain pilot phase measurements of 1-3 sectors. By applying the following steps and principles, one pilot measurement will be selected to calculate the final position.

The optimal selection method and steps of sector selection module are as follows:
Step S81, from the selected base stations, selecting the reference sector pilot phase and any pilot phase selected from each non-reference base station at random which compose a group of pilot phases;
Step S82, calculating the initial position of the mobile station according to this group of pilot phases or determining the initial position of the mobile station in other ways;
Step S83, calculating the distances between the centers of non-reference base stations and the initial position of mobile station;
Step S84, judging if the shortest distance is equals or close to the second shortest distance or not, if they are not equal and close, selecting the pilot measurement of the corresponding sector with the shortest distance and going to step S86; otherwise going to step 85;
Step S85, according to azimuths, flare angles and initial positions of respective sectors in the base station database, selecting the pilot measurement of the sector covering the initial position;
Step S86, outputting the pilot measurement of the selected sector.

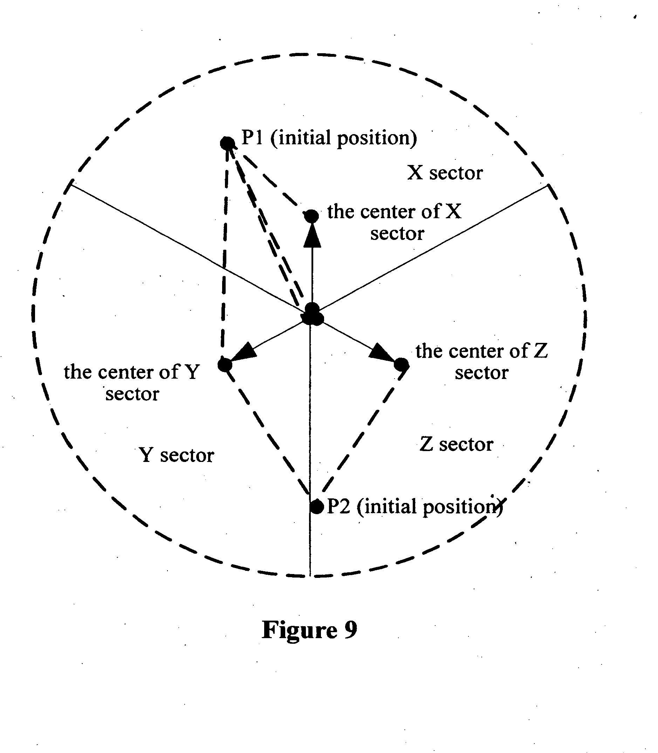

The sector which the initial position resides in is judged preliminarily according to the distance from the sector center to the initial position, which is further testified by the azimuth and flare angle of sector antenna in the base station database. The sector which the initial position resides in is judged eventually and sequentially the optimal pilot phases for calculation are selected. Adopting the above procedures to select the sectors is based on the following reasons: if the distances between the initial position and the position of sectors antennae are used for comparison, since the distances between sector antennae are very close, and the accuracy of the initial position is relatively low, it is very likely to make a wrong selection. Therefore, it is necessary to make a judgment by the distances from the initial position to the centers of respective sectors. In figure 9, it is very likely to come up with a wrong decision about which sector the initial position P1 belongs to, if the distances from P1 to the antennae of X, Y and Z sectors are used to make a judgment. However, if the distances from P1 to the centers of X, Y and Z sectors are used to make a judgment, it is obvious to judge that P1 belongs to X sector. If the shortest distance and the second shortest distance are equal or close to each other, the azimuth is used to make a further judgment. Regarding the initial position like P2, the distances from which to the centers of both Y sector and Z sector are equal or approximate, the azimuth should be used to judge the position of P2. The above two steps are complementary to each other. If the azimuth is wrong, it is difficult to obtain the shortest distance from initial position to the center of one sector. The principle of azimuth verifying aims to avoid the case of P2 demonstrated in figure 9. Because the distances from P2 to the centers of Y and Z sectors are equal or approximate, it is quite easy to make a wrong judgment about which sector P2 belongs to. If the azimuth is used to revise it, the problem can be avoided easily.

In conclusion, the present invention discloses a method for selecting multi-sector pilot measurements based on the locating model of time difference, which includes the following steps ( in order to be consistent with the previous statement, except for the new step S69 (not shown), the other steps will still adopt their original number. ):
Step S41, the pilot measurement selection system grouping the pilot phases measured by mobile station according to base stations to which the sectors belongs, wherein the number of the groups is the number of the base station measured by mobile station this time; .
Step S42, selecting method being adopted based on the number of the groups. If the number of the base stations is one, selecting pilot phases of all sectors and going to step S47; if the number of the base stations is two, going to step S43; if the number of the base stations is equal to or more than three, going to step S61;
Step S43, selecting designated number of pilot phases based on the request of position solution module and going to step S45;
Step S45, judging whether to select the optimal pilot phases from the same base station for measuring the multiple sectors, if needed, going to step S81, otherwise going to S86. Step S61, selecting m number of non-reference and reference base stations from the grouped base stations to compose a combination, and supposing that the position solution module requests m + 1 number of pilot measurements;
Step S62, calculating the distances from the m number of non-reference base stations selected to the reference station and the mean square difference of these distances, respectively;
Step S63, evaluating the mean square difference, the smaller it is, the higher score it obtains, vise verse, the bigger the mean square difference, the lower score it obtains;
Step S64, calculating the m number of included angles between adjoining base stations with the reference station as its vertex and the mean square difference of these angles;
Step S65, evaluating the mean square difference of the included angles, the smaller it is, the higher scores it obtains, vice verse, the lager it is, the lower score it obtains;
Step S66, performing weighted mean on the evaluated scores of the distance mean square difference and the included angle mean square difference. In general, weighting of the evaluated scores of distance mean square difference ought to be more than that of the evaluated scores of angle mean square difference;
Step S67, judging if all the combinations have been calculated, if not, repeating step S61 to step S66;
Step S68, after completing the calculation of all the combinations, selecting the pilot phase combination with the highest score of the weighted mean and going to S69;
Step S69, judging if there are pilot measurements with more than one sectors contained in the selected base stations, if not, going to step S86, otherwise going to step S81;
Step S81, from the selected base stations, the reference sector pilot phase and any pilot phase selected from each non-reference base station at random composing a group of pilot phases;
Step S82, calculating a position of the mobile station which is called the initial position of the mobile station according to this group of pilot phases or determining the initial position of the mobile station in other ways;
Step S83, calculating the distances between the respective centers of non-reference base stations and the initial position of mobile station;
Step S84, judging if the shortest distance is equals or close to the second shortest distance or not, if they are not equal and close, selecting the pilot measurement of the corresponding sector with the shortest distance and going to step S86; otherwise going to step 85;
Step S85, according to azimuths, flare angles and initial positions of respective sectors in the base station database, selecting the pilot measurement of the sector covering the initial position;
Step S86, outputting the pilot measurement of the selected sector.

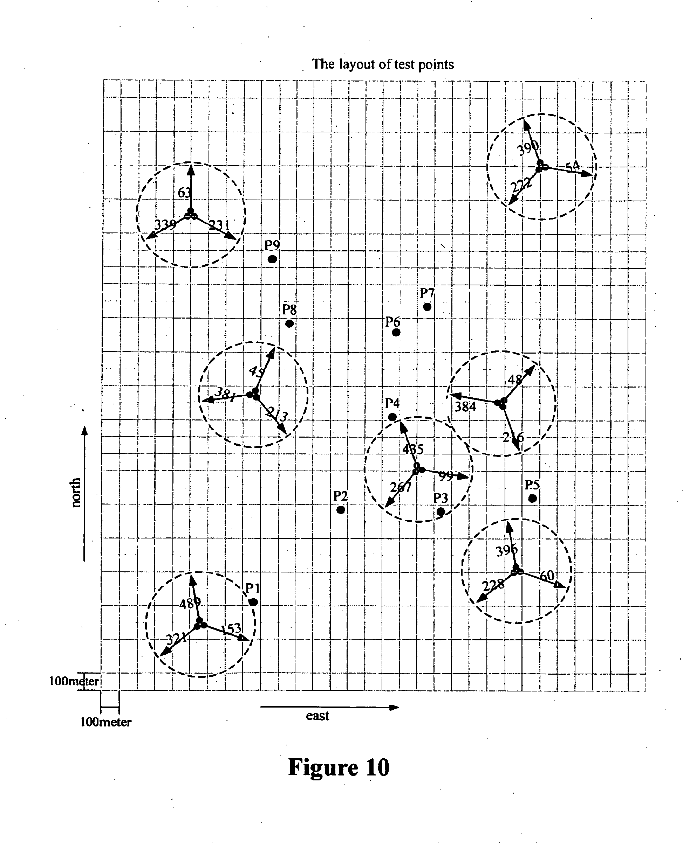

In order to verify the above conclusion, a test on site has been carried out by adopting the same locating algorithm to process the data measured by MS in every locating. Traditional method of selecting sectors according to the strength of pilot measurements and the above method of selection will be applied separately to process the position solution. Figure 10 shows the positions of sectors and the real points. Fifty tests have been carried out at each of the nine true value points.
1. Selecting sectors according to the pilot frequency intensity and performing TDOA calculation.
2. Selecting sectors according to the principle of the above method and performing TDOA calculation.

Please refer to figure 7. Compared with the real value, it can be seen that locating accuracy of most positions has been highly improved after calculating the average value of the tested results at every point.

The key point of the present method lies in: in the multi-sector pilot frequencies measured by MS, selection and combination of the pilot measurements comply with the two essential principles: eliminating the measuring errors and avoiding the introduction of the combinations of two sectors insensitive to the positions into calculation, therefore the locating accuracy has been highly improved.

### Industrial Applicability

Due to selecting a group of sectors which is near and evenly distributes around the reference sectors in the present invention, the error caused by measurement will be effectively counteracted and the locating accuracy will be highly improved. Because the present invention in principle avoids using two sectors of the same base station and the sectors which are insensitive to position to perform the position locating calculation, therefore it effectively avoids reducing the accuracy of the locating results caused by enlargement of measurement errors. The actual measurement demonstrates that as a result of applying the present program, the location results calculated by the optimal selection of the pilot measurements are closer to the actual position compared with the results calculated by other pilot measurements, thereby the locating accuracy is efficiently improved.

## Claims

1. A method for selecting multi-sector pilot measurements based on the locating model of time difference, comprising the following steps:
Step S41, grouping the measured pilot phases according to base stations to which the sectors belongs, wherein the number of the groups is the number of the base stations measured by the mobile station this time;
Step S42, if the number of base stations is one, I.e, there is only one base station serving as the reference station, then selecting all pilot measurements and going to step 547;
if the number of the base stations is two, then going to step S43; if the number of the base stations is equal to or more than three, then going to step S44;
Step S43, based on **a** request of position solution selecting a designated number of pilot phases and going to step S45;
Step 544, selecting the optimal ones of base stations and going to step 545;
Step S45, judging whether to select the optimal ones of the multiple sectors measured by the same base station, if needed, going to step S46, or else, selecting the sector pilot phases used by the base station to perform position calculation and going to step S47;
Step S46, performing optimal selection of the multiple sectors measured by the same base station;
Step S47, sending the pilot measurements corresponding to the relevant sectors to the position solution module;
said optimal selection of the sectors (S46) includes using the distances from the centers of the sectors and further, the azimuth and flare angle of the sector antenna in a base station database, for estimating the sector which the initial position resides in.

2. The method according to claim 1, **characterized in that** the said optimal selection of the base station Includes based on the distance between non-reference and reference base station and distribution around the reference base station, selecting combinations of the corresponding base stations, and selecting the combination of a set of base stations which are distributing evenly around the reference station and have similar distances from it.

3. The method according to claim 2, **characterized in that** the said dispatching the base station selection module to select the base stations comprises the following steps:
Step S61, selecting m number of non-reference and reference base stations from the grouped base stations to compose a combination;
Step S62, calculating the distances from the m number of non-reference base stations selected to the reference station and the mean square difference of these distances, respectively;
Step S63, evaluating the mean square difference, the smaller it is, the higher score it obtains, vise verse, the bigger the mean square difference, the lower score it obtains.
Step S64, calculating the m number of included angles between adjoining base stations with the reference station as its vertex and the mean square difference of these angles;
Step S65, evaluating the mean square difference of the included angles, the smaller it is, the higher scores it obtains, vice verse, the lager it is, the lower score it obtains;
Step S66, performing weighted mean on the evaluated scores of the distance mean square difference and the included angle mean square difference. In general, weighting of the evaluated scores of distance mean square difference ought to be more than that of the evaluated scores of angle mean square difference; .
Step S67, after completing the calculation of all the combinations, selecting the pilot phase combination with the highest score of the weighted mean.

4. The method according to claim 3, **characterized in that** comprising the following steps:
Step S81, from the selected base stations, selecting the reference sector pilot phase and any pilot phase selected from each non-reference base station at random which compose a group of pilot phases;
Step S82, calculating the initial position of the mobile station according to this group of pilot phases;
Step S83, calculating the distances between the centers of non-reference base stations and the initial position of mobile station;
Step S84, judging if the shortest distance is equals or close to the second shortest distance or not, if they are not equal and close, selecting the pilot measurement of the corresponding sector with the shortest distance and going to step S86; otherwise going to step 85;
Step S85, according to azimuths, flare angles and initial positions of respective sectors in the base station database, selecting the pilot measurement of the sector covering the initial position;
Step 586, outputting the pilot measurement of the selected sector.

5. The method according to claim 4, **characterized in that**
In step S61, supposing that the position solution module requests m+1 number of pilot measurements;
Before step 567, judging If all the combinations have been calculated, if not, repeating step S61 to step S66; and
Before step S81, judging If there are pilot measurements with more than one sectors contained in the selected base stations, if not, going to step S86, otherwise going to step S81.

6. A pilot measurement selection system, which constitutes the mobile locating system together with a pilot measurement system and a position solution system, the pilot measurement selection system is used for selecting multi-sector pilot measurements based on the locating model of time difference, **characterized in that** the pilot measurement selection system comprises:
A grouping module for grouping the measured pilot phases according to base stations to which the sectors belongs, wherein the number of the groups is the number of the base stations measured by the mobile station this time;
A selection module for selecting all pilot measurements if the number of base stations is one, I.e. there is only one base station serving as the reference station; selecting a designated number of pilot phases based on a request of a position solution module if the number of the base stations is two; selecting the optimal ones of the base stations if the number of the base stations is equal to or more than three;
A judging and optimal selection module for judging whether to select the optimal ones of the multiple sectors measured by the same base station, if the number of base stations is not equal to one, and performing optimal selection of the multiple sectors measured by the same base station if needed, or else, selecting the sector pilot phases used by the base station to perform position calculation; and
A sending module for sending the pilot measurements corresponding to the relevant sectors to the position solution module,
wherein said judging and optimal selection module uses the distances from the centers of the sectors and further, the azimuth and flare angle of the sector antenna in a base station database, for estimating the sector which the initial position resides in.

7. The system according to claim 6, **characterized in that** the said selection module selecting combinations of the corresponding base stations, and selecting the combination of a set of base stations which are distributing evenly around the reference station and have similar distances from it, based on the distance between non-reference and reference base station and distribution around the reference base station.

8. The system according to claim 7, **characterized in that,** the said selection module comprising:
A composing submodule, selecting m number of non-reference and reference base stations from the grouped base stations to compose a combination;
A first calculating submodule, calculating the distances from the m number of non-reference base stations selected to the reference station and the mean square difference of these distances, respectively;
A first evaluating submodule, evaluating the mean square difference, the smaller it is, the higher score it obtains, vise verse, the bigger the mean square difference, the lower score it obtains;
A second calculating submodule, calculating the m number of included angles between adjoining base stations with the reference station as its vertex and the mean square difference of these angles;
A second evaluating submodule, evaluating the mean square difference of the Included angles, the smaller it is, the higher scores It obtains, vice verse, the lager it is, the lower score it obtains;
A weighted mean submodule, performing weighted mean on the evaluated scores of the distance mean square difference and the Included angle mean square difference. In general, weighting of the evaluated scores of distance mean square difference ought to be more than that of the evaluated scores of angle mean square difference;
A selecting submodule, after completing the calculation of all the combinations, selecting the pilot phase combination with the highest score of the weighted mean.

9. The system according to claim 8, **characterized in that**, the said judging and optimal selection module comprising:
A selecting submodule, from the selected base stations, selecting the reference sector pilot phase and any pilot phase selected from each non-reference base station at random which compose a group of pilot phases;
A first calculating submodule, calculating the initial position of the mobile station according to this group of pilot phases;
A second calculating submodule, calculating the distances between the centers of non-reference base stations and the Initial position of mobile station;
A judging and selectiong submodule, judging If the shortest distance is equals or close to the second shortest distance or not, if they are not equal and close, selecting the pilot measurement of the corresponding sector with the shortest distance; otherwise selecting the pilot measurement of the sector covering the Initial position, according to azimuths, flare angles and initial positions of respective sectors in the base station database;
An outputting submodule, outputting the pilot measurement of the selected sector.

## Patentansprüche

1. Verfahren zum Auswählen von Mehrfach-Sektor-Pilotmessungen auf der Basis des Lokalisierungsmodells der Zeitdifferenz, mit den folgenden Schritten:
Schritt S41: Gruppieren der gemessenen Pilotphasen gemäß Basisstationen, zu denen die Sektoren gehören, wobei die Anzahl der Gruppen die Anzahl der durch die Mobilstation zu diesem Zeitpunkt gemessenen Basisstationen ist;
Schritt S42: wenn die Anzahl der Basisstationen eins ist, d.h. nur eine Basisstation als die Referenzstation dient, Auswählen aller Pilotmessungen und Gehen zu Schritt 547;
wenn die Anzahl der Basisstationen zwei ist, Gehen zu Schritt S43; wenn die Anzahl der Basisstationen größer oder gleich drei ist, Gehen zu Schritt S44;
Schritt S43: Auswählen einer designierten Anzahl von Pilotphasen auf der Basis einer Positionslösungsanforderung und Gehen zu Schritt S45;
Schritt S44: Auswählen der optimalen Basisstationen und Gehen zu Schritt 545;
Schritt S45: Beurteilen, ob die optimalen der durch dieselbe Basisstation gemessenen mehrfachen Sektoren auszuwählen sind, notwendigenfalls Gehen zu Schritt S46 oder andernfalls Auswählen der durch die Basisstation verwendeten Sektorpilotphasen, um eine Positionsberechnung durchzuführen, und Gehen zu Schritt S47;
Schritt S46: Durchführen einer optimalen Auswahl der durch dieselbe Basisstation gemessenen mehrfachen Sektoren;
Schritt S47: Senden der den relevanten Sektoren entsprechenden Pilotmessungen zu dem Positionslösungsmodul;
wobei die optimale Auswahl der Sektoren (S46) die Verwendung der Distanzen von den Mitten der Sektoren und ferner den Azimut- und Öffnungswinkel der Sektorantenne in einer Basisstations-Datenbank zur Schätzung des Sektors, in der die anfängliche Position angeordnet ist, umfasst.

2. Verfahren nach Anspruch 1, **dadurch gekennzeichnet, dass** die optimale Auswahl der Basisstation umfasst, auf der Basis der Distanz zwischen Nicht-Referenz- und Referenz-Basisstation und der Verteilung um die Referenz-Basisstation Kombinationen der entsprechenden Basisstationen, auszuwählen und die Kombination einer Menge von Basisstationen auszuwählen, die gleichmäßig um die Referenzstation verteilt sind und ähnliche Distanzen von ihr aufweisen.

3. Verfahren nach Anspruch 2, **dadurch gekennzeichnet, dass** das Dispatchen des Basisstations-Auswahlmoduls, um die Basisstationen auszuwählen, die folgenden Schritte umfasst:
Schritt S61: Auswählen von m Nicht-Referenz- und Referenz-Basisstationen aus den gruppierten Basisstationen, um eine Kombination zusammenzustellen;
Schritt S62: Berechnen der Distanzen von den m ausgewählten Nicht-Referenz-Basisstationen zu der Referenzstation bzw. der Mean-Square-Differenz dieser Distanzen;
Schritt S63: Auswerten der Mean-Square-Differenz, wobei sie eine umso höhere Bewertung erhält, je kleiner sie ist und umgekehrt einen umso niedrigere Bewertung erhält, je größer die Mean-Square-Differenz ist;
Schritt S64: Berechnen der m eingeschlossenen Winkel zwischen angrenzenden Basisstationen mit der Referenzstation als ihr Vertex und der Mean-Square-Differenz dieser Winkel;
Schritt S65: Auswerten der Mean-Square-Differenz der eingeschlossenen Winkel, wobei sie umso höhere Bewertungen erhält, je kleiner sie ist und umgekehrt eine umso niedrigere Bewertung erhält, je größer sie ist;
Schritt S66: Durchführen einer gewichteten Mittelung an den ausgewerteten Bewertungen der Mean-Square-Differenz der Distanz und der Mean-Square-Differenz des eingeschlossenen Winkels, wobei im Allgemeinen die Gewichtung der ausgewerteten Bewertungen der Mean-Square-Differenz der Distanz größer als die der ausgewerteten Bewertungen der Mean-Square-Differenz des Winkels sein sollte;
Schritt S67: Auswählen der Pilotphasenkombination mit der höchsten Bewertung des gewichteten Mittelwerts nach dem Abschluss der Berechnung aller Kombinationen.

4. Verfahren nach Anspruch 3, **dadurch gekennzeichnet, dass** es die folgenden Schritte umfasst:
Schritt S81: Auswählen, aus den ausgewählten Basisstationen, der Referenzsektor-Pilotphase und einer etwaigen Pilotphase, die von jeder Nicht-Referenz-Basisstation ausgewählt wird, auf zufällige Weise, wodurch eine Gruppe von Pilotphasen zusammengestellt wird;
Schritt S82: Berechnen der anfänglichen Position der Mobilstation gemäß dieser Gruppe von Pilotphasen;
Schritt S83: Berechnen der Distanzen zwischen den Mitten von Nicht-Referenz-Basisstationen und der anfänglichen Position der Mobilstation;
Schritt S84: Beurteilen, ob die kürzeste Distanz gleich oder in der Nähe der zweitkürzesten Distanz ist oder nicht, wenn sie nicht gleich und nahe sind, Auswählen der Pilotmessung des entsprechenden Sektors mit der kürzesten Distanz und Gehen zu Schritt S86; andernfalls Gehen zu Schritt S85;
Schritt S85: Auswählen der Pilotmessung des die anfängliche Position abdeckenden Sektors gemäß den Azimuten, Öffnungswinkeln und anfänglichen Positionen jeweiliger Sektoren in der Basisstations-Datenbank;
Schritt S86: Ausgeben der Pilotmessung des ausgewählten Sektors.

5. Verfahren nach Anspruch 4, **gekennzeichnet durch**:
im Schritt S61 Annehmen, dass das Positionslösungsmodul m+1 Pilotmessungen anfordert;
vor Schritt S67 Beurteilen, ob alle Kombinationen berechnet wurden, wenn nicht, Wiederholen von Schritt S61 bis Schritt S66; und
vor Schritt S81 Beurteilen, ob es Pilotmessungen mit mehr als einem in den gewählten Basisstationen enthaltenem Sektor gibt, wenn nicht, Gehen zu Schritt S86, andernfalls Gehen zu Schritt S81.

6. Pilotmessungsauswahlsystem, das das Mobillokalisierungssystem zusammen mit einem Pilotmessungssystem und einem Positionslösungssystem bildet, wobei das Pilotmessungsauswahlsystem zum Auswählen von Mehrfach-Sektor-Pilotmessungen auf der Basis des Lokalisierungsmodels der Zeitdifferenz verwendet wird, **dadurch gekennzeichnet, dass** das Pilotmessungsauswahlsystem Folgendes umfasst:
ein Gruppierungsmodul zum Gruppieren der gemessenen Pilotphasen gemäß Basisstationen, zu denen die Sektoren gehören, wobei die Anzahl der Gruppen die Anzahl der durch die Mobilstation zu diesem Zeitpunkt gemessenen Basisstationen ist;
ein Auswahlmodul zum Auswählen aller Pilotmessungen, wenn die Anzahl der Basisstationen eins ist, d.h. nur eine Basisstation als die Referenzstation dient; Auswählen einer designierten Anzahl von Pilotphasen auf der Basis einer Anforderung eines Positionslösungsmoduls, wenn die Anzahl der Basisstation zwei ist; Auswählen der optimalen Basisstationen, wenn die Anzahl der Basisstationen größer oder gleich drei ist;
ein Beurteilungs- und Optimalauswahlmodul zum Beurteilen, ob die optimalen der durch dieselbe Basisstation gemessenen mehrfachen Sektoren auszuwählen sind, wenn die Anzahl der Basisstationen nicht gleich eins ist, und notwendigenfalls zum Durchführen einer optimalen Auswahl der durch dieselbe Basisstation gemessenen mehrfachen Sektoren oder andernfalls Auswählen der Sektorpilotphasen, die durch die Basisstation verwendet werden, um Positionsberechnung durchzuführen; und
ein Sendemodul zum Senden der Pilotmessungen, die den relevanten Sektoren entsprechen, zu dem Positionslösungsmodul,
wobei das Beurteilung- und Optimalauswahlmodul die Distanzen von den Mitten der Sektoren und ferner den Azimut- und Öffnungswinkel der Sektorantenne in einer Basisstations-Datenbank zur Schätzung des Sektors verwendet, in dem die anfängliche Position angeordnet ist.

7. System nach Anspruch 6, **dadurch gekennzeichnet, dass** das Auswahlmodul Kombinationen der entsprechenden Basisstationen auswählt und auf der Basis der Distanz zwischen Nicht-Referenz- und Referenz-Basisstation und Verteilung um die Referenz-Basisstation die Kombination einer Menge von Basisstationen auswählt, die gleichmäßig um die Referenzstation verteilt sind und ähnliche Distanzen von ihr aufweisen.

8. System nach Anspruch 7, **dadurch gekennzeichnet, dass** das Auswahlmodul Folgendes umfasst:
ein Zusammenstellungs-Submodul, dass m Nicht-Referenz- und Referenz-Basisstationen aus den gruppierten Basisstationen auswählt, um eine Kombination zusammenzustellen;
ein erstes Berechnungs-Submodul, das die Distanzen von den m ausgewählten Nicht-Referenz-Basisstationen bzw. die Mean-Square-Differenz dieser Distanzen berechnet;
ein erstes Auswertungs-Submodul, das die Mean-Square-Differenz auswählt, wobei sie eine umso höhere Bewertung erhält, je kleiner sie ist und umgekehrt einen umso niedrigere Bewertung erhält, je größer die Mean-Square-Differenz ist;
ein zweites Berechnungs-Submodul, das die m eingeschlossenen Winkel zwischen angrenzenden Basisstationen mit der Referenzstation als ihr Vertex und die Mean-Square-Differenz dieser Winkel berechnet;
ein zweites Auswertungs-Submodul, das die Mean-Square-Differenz der eingeschlossenen Winkel auswertet, wobei sie umso höhere Bewertungen erhält, je kleiner sie ist und umgekehrt eine umso niedrigere Bewertung erhält, je größer sie ist;
ein Submodul für gewichtete Mittelung, das eine gewichtete Mittelung an den ausgewerteten Bewertungen der Mean-Square-Differenz der Distanz und der Mean-Square-Differenz des eingeschlossenen Winkels durchführt, wobei im Allgemeinen die Gewichtung der ausgewerteten Bewertungen der Mean-Square-Differenz der Distanz größer als die der ausgewerteten Bewertungen der Mean-Square-Differenz des Winkels sein sollte;
ein Auswahl-Submodul, das nach dem Abschluss der Berechnung aller Kombinationen die Pilotphasenkombination mit der höchsten Bewertung des gewichteten Mittelwerts auswählt.

9. System nach Anspruch 8, **dadurch gekennzeichnet, dass** das Beurteilungs- und Optimalauswahlmodul Folgendes umfasst:
ein Auswahl-Submodul, das aus den ausgewählten Basisstationen die Referenzsektor-Pilotphase und eine etwaige Pilotphase, die aus jeder nicht-Referenz-Basisstation ausgewählt wird, auf zufällige Weise auswählt, wodurch eine Gruppe von Pilotphasen zusammengestellt wird;
ein erstes Berechnungs-Submodul, das die anfängliche Position der Mobilstation gemäß dieser Gruppe von Pilotphasen berechnet;
ein zweites Berechnungs-Submodul, das die Distanzen zwischen den Mitten von Nicht-Referenz-Basisstationen und der anfänglichen Position der Mobilstation berechnet;
ein Beurteilungs- und Auswahl-Submodul zum Beurteilen, ob die kürzeste Distanz gleich oder in der Nähe der zweitkürzesten Distanz ist oder nicht, wenn sie nicht gleich oder nahe sind, Auswählen der Pilotmessung des entsprechenden Sektors mit der kürzesten Distanz; andernfalls Auswählen der Pilotmessung der die anfängliche Position abdeckenden Sektors gemäß Azimuten, Öffnungswinkeln und anfänglichen Positionen jeweiliger Sektoren in der Basisstations-Datenbank;
ein Ausgabe-Submodul, das die Pilotmessung des ausgewählten Sektors ausgibt.

## Revendications

1. Procédé permettant de sélectionner des mesures pilotes de secteurs multiples en fonction du modèle de localisation de différence temporelle, comprenant les étapes suivantes :
Étape S41, regrouper les phases pilotes mesurées suivant les stations de base auxquelles les secteurs appartiennent, cas dans lequel le nombre de groupes représente le nombre de stations de base mesurées par la station mobile à ce moment-là ;
Étape S42, si le nombre de stations de base est égal à un, c'est-à-dire qu'une seule station de base sert de station de référence, sélectionner dans ce cas toutes les mesures pilotes et passer à l'étape S47 ;
Si le nombre de stations de base est égal à deux, passer alors à l'étape S43 ; si le nombre de stations de base est égal ou supérieur à trois, passer alors à l'étape S44 ;
Étape S43, sur la base d'une demande de solution de position, sélectionner un nombre désigné de phases pilotes et passer à l'étape S45 ;
Étape S44, sélectionner les stations optimales parmi les stations de base et passer à l'étape S45 ;
Étape S45, faire une appréciation pour décider de sélectionner les secteurs optimaux parmi les multiples secteurs mesurés par la même station de base, si besoin est, passer à l'étape S46, ou le cas échéant sélectionner les phases pilotes de secteur utilisées par la station de base pour effectuer le calcul de position et passer à l'étape S47 ;
Étape S46, réaliser une sélection optimale des multiples secteurs mesurés par la même station de base ;
Étape S47, envoyer les mesures pilotes correspondant aux secteurs pertinents au module de solution de position ;
Ladite sélection optimale des secteurs (S46) englobant l'utilisation des distances à partir des centres des secteurs et, en outre, l'azimut et l'angle d'ouverture de l'antenne de secteur se trouvant dans une base de données d'une station de base, afin d'estimer le secteur dans lequel réside la position initiale.

2. Procédé selon la revendication 1, **caractérisé en ce que** ladite sélection optimale de la station de base englobe, en fonction de la distance entre une station de base de non-référence et une station de base de référence et de la distribution autour de la station de base de référence, l'opération consistant à sélectionner des combinaisons de stations de base correspondantes et à sélectionner la combinaison d'un ensemble de stations de base qui ont une distribution uniforme autour de la station de référence et qui présentent des distances d'éloignement similaires par rapport à celle-ci.

3. Procédé selon la revendication 2, **caractérisé en ce que** ladite répartition du module de sélection de station de base destinée à sélectionner les stations de base comprend les étapes suivantes :
Étape S61, sélectionner un nombre m de stations de base de non-référence et de stations de base de référence à partir des stations de base groupées afin de composer une combinaison ;
Étape S62, calculer les distances à partir du nombre m de stations de base de non-référence jusqu'à la station de référence ainsi que la différence de moyenne quadratique de ces distances respectivement ;
Étape S63, évaluer la différence de moyenne quadratique - plus elle est petite, plus la notation qu'elle obtient sera élevée, vice versa, plus la différence de moyenne quadratique est grande, plus la notation qu'elle obtient sera faible ;
Étape S64, calculer le nombre m d'angles inclus entre des stations de base contiguës dont le sommet est constitué par la station de référence et la différence de moyenne quadratique de ces angles ;
Étape S65, évaluer la différence de moyenne quadratique des angles inclus - plus elle est petite, plus la notation qu'elle obtient sera élevée, vice versa, plus elle est importante, plus la notation qu'elle obtient sera faible ;
Étape S66, produire une moyenne pondérée sur les notations évaluées de la différence de moyenne quadratique des distances et de la différence de moyenne quadratique des angles inclus. En général, la pondération des notations évaluées de la différence de moyenne quadratique des distances devrait être supérieure à celle des notations évaluées de la différence de moyenne quadratique des angles inclus ;
Étape S67, après achèvement du calcul de toutes les combinaisons, sélectionner la combinaison de phases pilotes ayant la notation la plus élevée de la moyenne pondérée.

4. Procédé selon la revendication 3, **caractérisé en ce qu'**il comprend les étapes suivantes :
Étape S81, à partir des stations de base sélectionnées, sélectionner la phase pilote du secteur de référence et une phase pilote quelconque sélectionnée suivant une base aléatoire à partir de chaque station de base de non-référence qui composent un groupe de phases pilotes ;
Étape S82, calculer la position initiale de la station mobile sur la base de ce groupe de phases pilotes ;
Étape S83, calculer les distances entre les centres des stations de base de non-référence et la position initiale d'une station mobile ;
Étape S84, juger si la distance la plus courte est, ou non, égale à la deuxième distance la plus courte, ou se rapproche de cette dernière - si elles ne sont pas égales et proches, sélectionner la mesure pilote du secteur correspondant ayant la distance la plus courte et passer à l'étape S86 ; dans les autres cas, passer à l'étape S85 ;
Étape S85, sur la base des azimuts, des angles d'ouverture et des positions initiales de secteurs respectifs figurant dans la base de données de la station de base, sélectionner la mesure pilote du secteur couvrant la position initiale ;
Étape S86, produire la mesure pilote du secteur sélectionné.

5. Procédé selon la revendication 4, **caractérisé en ce que** :
À l'étape S61, partir de l'hypothèse selon laquelle le module de solution de position demande un nombre m+1 de mesures pilotes ;
Avant l'étape S67, juger si toutes les combinaisons ont été calculées, sinon répéter l'étape S61 jusqu'à l'étape S66 ; et
Avant l'étape S81, juger s'il existe des mesures pilotes dont plus d'un seul secteur est contenu dans les stations de base sélectionnées, sinon passer à l'étape S86, dans les autres cas, passer à l'étape S81.

6. Système de sélection de mesures pilotes, qui constitue le système de localisation mobile en conjonction avec un système de mesures pilotes et un système de solution de position, le système de sélection de mesures pilotes étant utilisé pour sélectionner des mesures pilotes de secteurs multiples en fonction du modèle de localisation de différence temporelle, **caractérisé en ce que** le système de sélection de mesures pilotes comprend :
Un module de regroupement destiné à regrouper les phases pilotes mesurées suivant les stations de base auxquelles les secteurs appartiennent, cas dans lequel le nombre de groupes représente le nombre de stations de base mesurées par la station mobile à ce moment-là ;
Un module de sélection destiné à sélectionner toutes les mesures pilotes si le nombre de stations de base est égal à un, c'est-à-dire qu'une seule station de base sert de station de référence ; sélectionner un nombre désigné de phases pilotes en fonction d'une demande émanant d'un module de solution de position si le nombre de stations base est égal à deux ; sélectionner les stations optimales parmi les stations de base si le nombre de stations de base est égal ou supérieur à trois ;
Un module d'appréciation et de sélection optimale pour apprécier s'il convient de sélectionner les secteurs optimaux parmi les multiples secteurs mesurés par la même station de base, si le nombre de stations de base n'est pas égal à un, et effectuer une sélection optimale parmi les multiples secteurs mesurés par la même station de base, si besoin est, ou le cas échéant sélectionner les phases pilotes de secteur utilisées par la station de base pour effectuer le calcul de position ; et
Un module d'envoi destiné à envoyer, au module de solution de position, les mesures pilotes correspondant aux secteurs pertinents,
Cas dans lequel ledit module d'appréciation et de sélection optimale utilise les distances à partir des centres des secteurs et, en outre, l'azimut et l'angle d'ouverture de l'antenne de secteur se trouvant dans une base de données d'une station de base, afin d'estimer le secteur dans lequel réside la position initiale.

7. Système selon la revendication 6, **caractérisé en ce que** ledit module de sélection sélectionne des combinaisons de stations de base correspondantes, et sélectionne la combinaison d'un ensemble de stations de base qui ont une distribution uniforme autour de la station de référence et qui présentent des distances d'éloignement similaires par rapport à celle-ci, en fonction de la distance entre une station de base de non-référence et une station de base de référence et de la distribution autour de la station de base de référence.

8. Système selon la revendication 7, **caractérisé en ce que** ledit module de sélection comprend :
Un sous-module de composition, lequel sélectionne un nombre m de stations de base de non-référence et de stations de base de référence à partir des stations de base groupées afin de composer une combinaison ;
Un premier sous-module de calcul, lequel calcule les distances à partir du nombre m de stations de base de non-référence jusqu'à la station de référence ainsi que la différence de moyenne quadratique de ces distances respectivement ;
Un premier sous-module d'évaluation, lequel évalue la différence de moyenne quadratique - plus elle est petite, plus la notation qu'elle obtient sera élevée, vice versa, plus la différence de moyenne quadratique est grande, plus la notation qu'elle obtient sera faible ;
Un deuxième sous-module de calcul, lequel calcule le nombre m d'angles inclus entre des stations de base contiguës dont le sommet est constitué par la station de référence et la différence de moyenne quadratique de ces angles ;
Un deuxième sous-module d'évaluation, lequel évalue la différence de moyenne quadratique des angles inclus - plus elle est petite, plus la notation qu'elle obtient sera élevée, vice versa, plus elle est importante, plus la notation qu'elle obtient sera faible ;
Un sous-module de moyenne pondérée, lequel produit une moyenne pondérée sur les notations évaluées de la différence de moyenne quadratique des distances et de la différence de moyenne quadratique des angles inclus. En général, la pondération des notations évaluées de la différence de moyenne quadratique des distances devrait être supérieure à celle des notations évaluées de la différence de moyenne quadratique des angles inclus ;
Un sous-module de sélection, après achèvement du calcul de toutes les combinaisons, sélectionner la combinaison de phases pilotes ayant la notation la plus élevée de la moyenne pondérée.

9. Système selon la revendication 8, **caractérisé en ce que** ledit module d'appréciation et de sélection optimale comprend :
Un sous-module de sélection, à partir des stations de base sélectionnées, sélectionner la phase pilote du secteur de référence et une phase pilote quelconque sélectionnée suivant une base aléatoire à partir de chaque station de base de non-référence qui composent un groupe de phases pilotes ;
Un premier sous-module de calcul, lequel calcule la position initiale de la station mobile sur la base de ce groupe de phases pilotes ;
Un deuxième sous-module de calcul, lequel calcule les distances entre les centres des stations de base de non-référence et la position initiale d'une station mobile ;
Un sous-module d'appréciation et de sélection, lequel juge si la distance la plus courte est, ou non, égale à la deuxième distance la plus courte, ou se rapproche de cette dernière - si elles ne sont pas égales et proches, sélectionner la mesure pilote du secteur correspondant ayant la distance la plus courte ; dans les autres cas, sélectionner la mesure pilote du secteur couvrant la position initiale sur la base des azimuts, des angles d'ouverture et des positions initiales de secteurs respectifs figurant dans la base de données de la station de base ;
Un sous-module de sortie, lequel produit la mesure pilote du secteur sélectionné.
